# EUROPEAN PATENT APPLICATION

(11) **EP 0 535 919 A2**
(43) Date of publication of application: **07.04.1993**
(21) Application number: 92308887.6
(22) Date of filing: 30.09.1992
(51) Int. Cl.: G06K 7/08, G06K 19/04, G06K 7/10

(54) **Method for identifying a penetrable member**

(30) Priority: 01.10.1991 US 769870
(71) Applicant: Ryan, Michael C., Mitchelville, Iowa 50169 (US)
(72) Inventor: Ryan, Michael C., Mitchelville, Iowa 50169 (US)
(74) Representative: Singleton, Jeffrey

(57) **Abstract**

A method for identifying a penetrable member such as a rail-road tie, utility pole, pallet, standing tree, or the like. A passive or active- transponder (12) is encoded with identification information and placed within an accommodating receptacle (20 ;32) in a nail, screw, bolt or similar fastener (10 ;30). The fastener (10 ;30) is inserted into the penetrable member by use of a nail gun, drill, hammer or other suitable device. Identification information stored in the transponder (12) is read after insertion to identify the penetrable member.

## Description

### Background of the Invention

The invention relates generally to identification methods and, more particularly, to use of a nail, screw, or bolt which includes an encoded passive transponder to identify a penetrable member such as a railroad tie, utility pole, or the like.

The railroad industry replaces vast numbers of railroad ties each year to maintain the railroad bed. Heretofore, inspection crews marked ties that were to be replaced with a marker, paint or dye. Sometime later, frequently as much as a year later, a tie crew searches for and replaces the marked ties that it identifies. The markings are subject to degradation byen- vironmental factors such as water and sunlight, and may also be removed or obscured by physical contact from a passing train or other railroad equipment.

The current method does not allow inventory tracking of the tie so that the inspection crew, for example, would have no read means for identifying ties of at least a particular age or that may be of a lot that was found to be incorrectly processed and therefore subject to early failure.

### Summary of the Invention

The invention consists of a method for identifying a penetrable member such as a railroad tie, utility pole, pallet, tree or the like. The method may make use of a passive transponder whic is encoded with identifying information. In one embodiment, the passive transponder is inserted into a corresponding receptacle in a nail and the combination is inserted into the penetrable member by a nail gun. In another embodiment, the empty nail is first inserted into the penetrable member and then the passive transponder is secured in the receptacle.

The passive transponder may be of the read-only type wherein a coded number identifying the transponder was stored in its memory during manufacture. Alternatively, the passive transponder may be read-writeable, in which case specific information regarding the penetrable member, such as source, date, processing history, and so on may be stored on the transponder by the person practicing the method. In either instance, the identifying information can be read at any time, including after insertion, by bringing an appropriate reader into communicating proximity with the passive transponder. An active transponder, i.e., one with an internal power source such as a battery, could alternatively be used. An active transponder would have the same capabilities as the passive transponder but would also be able to collect and store data even when a reader was not present.

In accordance with the foregoing, an object of the present invention is to provide a simple, time efficient, and cost-effective method for identifying railroad ties, utility poles, and the like to assist in reliable and durable marking of the same for replacement and quick and easy identification of a marked object at any time in the future.

Another preferred object of the invention is to provide a method for labeling penetrable members with inventory control information such as identify of the manufacturer, date of manufacture, product ID, date of placement, lot number, and so on.

A further preferred object of the invention is to provide a method for identifying a penetrable member, in part, by geographic location obtained from a geodetic satellite.

These and other objects of the invention will be made clear to a person of ordinary skill in the art upon review of the following disclosure.

### Brief Description of the Drawings

Fig. 1 is a longitudinal cross sectional view of a nail of the present invention showing a passive transponder received within the nail.
Fig. 2 is a transverse cross sectional view taken along the line 2-2 of Fig. 1.
Fig. 3 is a longitudinal cross sectional view of a screw of the present invention showing a passive transponder received therein.
Fig. 4 is a schematic block diagram of electrical circuitry used to communicate with the transponder.
Fig. 5 is a perspective view of a personal identification module including a passive transponder and a magnet.

### Detailed Description of a Preferred Embodiment

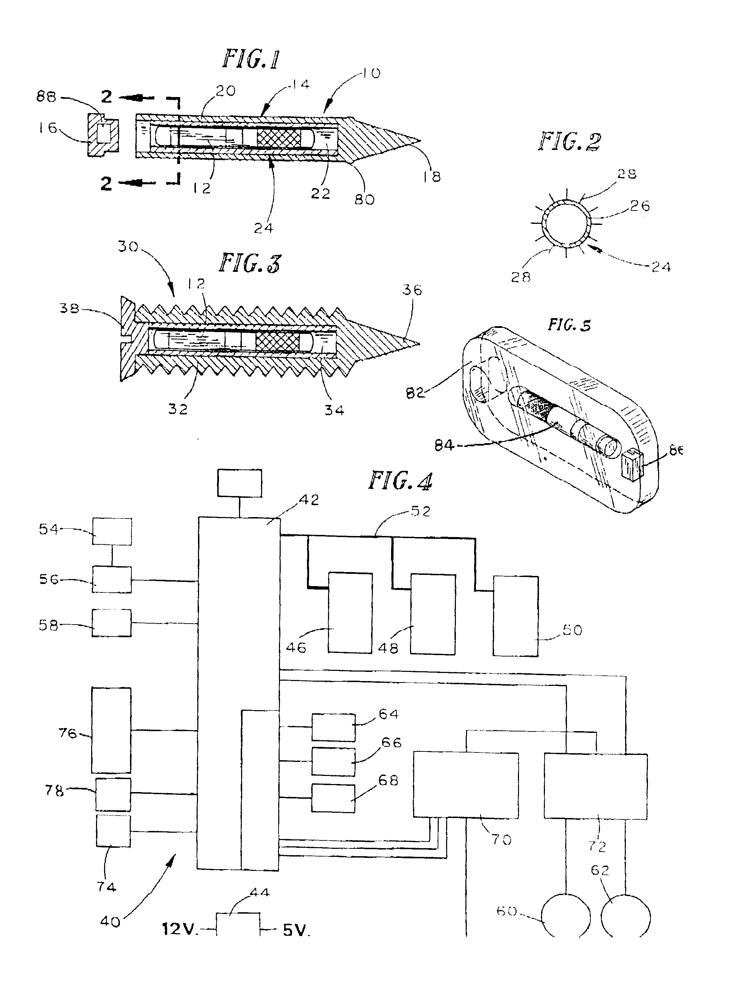

Illustrated in Fig. 1, generally at 10, is a nail of the present invention in which is received a passive transponder 12 and which is adapted for insertion into a penetrable member such as a railroad tie, utility pole, or the like. The passive transponder 12 is of a type such as is manufactured by Texas Instruments and sold under the mark Tiris@. The nail 10 is comprised of a body portion 14 and an anvil portion 16. The body portion 14 has a pointed proximal end portion 18 and a cylindrical main body portion 20. A cylindrical well 22 is created in the main body portion 20 of a size to accommodate the passive transponder 12. A deflection sheath 24, as best illustrated in Fig. 2, surrounds the passive transponder 12 and fills the space between the passive transponder 12 and the side walls of the receiving well 22. The deflection sheath 24 is comprised of a central cylindrical lining 26 and a plurality of longitudinal ribs 28 which extend radially outwardly from the central lining 26. As will be described in more detail below, the deflection sheath 24 serves to physically isolate and cushion the passive transponder 12 within the nail 10. The central well 22 is closed by the anvil portion 16 received in a press fit therein. A magnet 88, useful in detection of the location of the nail 10, is enclosed within the anvil portion 16.

In an alternative embodiment, as illustrated in Fig. 3, the passive transponder 12 is received inside a screw 30 which includes a cylindrical main body portion 32 having a central well 34 and a pointed proximal end portion 36. An end cap 38 is received in a press fit in the central well 34 and includes a recess for receiving a screwdriver tip for rotation of the screw 30 about its longitudinal axis. Threads extend from the main body portion 32 and the proximal end portion 36 so that the screw 30 may, in the conventional manner, be inserted into a penetrable member. Alternately, the end cap 38 may be shaped so as to be engageable by a wrench for insertion into or withdrawal from the penetrable member.

The nails 10, or alternatively the screws 30, are used to identify penetrable members such as railroad ties, utility poles, or the like. The passive transponder is encoded with identifying information such as, in the basic version, a coded number which was stored in the transponder during manufacture. If the passive transponder 12 is read-writeable, specific information regarding the penetrable member, such as source, date, processing history, geographic location, replacement status, and so on, is stored on the transponder. The identifying information can be read at any time, including after insertion, by bringing a reader 40 (Fig. 4) into communicating proximity with the passive transponder 12.

In a typical operation, the reader and control unit 40 would be positioned on a railroad vehicle and used to control the insertion of the nails 10 or screws 30 into a penetrable member such as a railroad tie, the recording of information on the passive transponder 12, and the reading of information from the passive transponder 12. Information relevant to the operation of the reader 40 is collected by a plurality of sensors and fed into a central processing unit (CPU) 42. Power voltage is supplied to the CPU 42 through a 5-volt output voltage regulator 44 which is connected to the 12-volt electrical system of the vehicle. Instruction coding or programs for the operation of the CPU 42 are stored on a 32K byte read-only memory device 46. A 32K byte electrically erasable programmable read-only memory device (EEPROM) 48 serves as a means for modifying or updating the program forcon- trolling the operation of the reader 40. If the program originally stored on the 32K byte device 46 is to be changed, a new program can be stored on the double E prom 48 via an appropriate communication link (including the inductive coil to be described below). Data collected by the reader 40 is stored on a 32K bit nonvolatile memory device 50. A communication bus 52 connects the memory devices to the CPU 42. A keyboard 54 and interface 56 are provided forthe manual input of information to the CPU 42. An alphanumeric display 58 is also provided to display information being input from the keyboard 54 and information coming from the CPU 42. An inductive coil 60 or62 serves as an antenna for radio frequency (RF) communication with the reader40. Information may also be input through a serial data port by way of a global positioning satellite (GPS) receiver 64, an FM radio transceiver 66, or an RS-232 communications interface 68. Voltage signals for transmission from the CPU 42 originate in the serial data port and are communicated to the inductive coils 60 and 62 through a transponder module 70 which includes a frequency shift key (FSK) modulator and demodulator, an RS-422 coil driver received signal strength indicator (RSSI) circuitry. The FSK transmitted signal is directed through an isolation transformer of the transponder module 70 which is connected to the inductive coil antenna 60 and 62 through a double-pole, single-throw relay 72. The coil 60 is connected to a normally closed circuit of the relay 72. An RF signal transmitted by the inductive coil 60 can be received by an appropriately matched antenna of a remote RF receiving device (not shown). The inductive coil 60 can also function as an RF receiving antenna wherein an impinging RF signal induces a voltage signal in the inductive coil 60. In such circumstances, the transmitting antenna of the remote RF device is moved into communicating proximity with the inductive coil 60. The received signal from the antenna 60 is induced across the isolation transformer of the transponder module 70 through the normally closed contacts of the relay 72. The voltage signal is then transmitted through an FSK demodulator of the transponder module 70 and then to the synchronous serial data port of the CPU 42. The inductive coil 62 serves to transmit and receive information from the passive transponder 12 and also to transmit large energy pulses which are absorbed by the passive transponder 12 and serve to supply the power needed for active operation of the transponder 12. In the preferred embodiment, the transponder module 70 uses a 134.2 kHz signal to power up the passive transponder 12 and receives the transponder signals at 128.2 kHz. The FSK protocol has a center frequency of 128.2 kHz with a logic 0 at 121.2 kHz and a logic 1 at 135.2 kHz. The frequency of the power pulses is 134.2 kHz.

Normally the reader 40 will use antenna 60 for its communication. But when a personal identification module, including a transponder 84, and magnet 86 (Fig. 5) is brought into proximity with antenna 62, a Hall effect sensor 74 is effected by the magnet 86 and causes the CPU 42 to change the state of the relay 72 and, thus cause the circuit to use the antenna 62 for its communication. When the personal identification module 82 is taken away from the Hall effect sensor 74, the CPU 42 then changes the state of the relay 72 back to its normally closed state so that the roader 10 again uses antenna 60.

The reader 40 also controls the insertion of the nails 10 and/or screws 30 in the penetrable member. A plurality of sensors 76 are connected to the CPU and provide information regarding the density of the penetrable member, the position of the penetrable member, the wheel position of the vehicle, the position of an arm which is used for insertion of the nails 10 or screws 30, temperature, and other relevant information.

In practice, the reader40 would be positioned on a railroad vehicle which may either travel on the rails or be a ground vehicle which can be driven alongside the rails. A maintenance crew, for example, may be monitoring the railroad ties of a section of track for possible replacement. Upon identifying a railroad tie that is to be replaced, the screw would initiate the procedure for inserting a nail 10 or screw 30 into the selected railroad tie. If the transponder 12 is a read-only type, and a nail 10 is to be used, the nail 10 is inserted into the railroad tie by a nail gun of the conventional type. Alternatively, a manually operated hammer (or drill if using a screw 30) could also be used for hand installation. In certain applications, it may be advantageous to drill a pilot hole prior to insertion of the nail 10 to reduce the impact forces that the nail 10 will be subjected to upon insertion. It has been found advantageous to create a raised rib 80 (Fig. 1) around the circumference of the nail 10 at the juncture between the cylindrical main body portion 20 and the pointed proximal end portion 18. This raised portion 80 will reduce the frictional force of the overall length of the main body portion 20 with the penetrable member.

If the penetrable member is made of a material that would split or is otherwise unsuited for nailing, such as concrete, a screw 30 may be used with or without a pilot hole. It has been found that a Condrive 2000@ and Tapcon® fastening system available from Elco Industries, Inc., works well for insertion of the screws 30 if adjusted to accommodate the diameter of the screws 30.

Both the nails 10 and the screws 30 in the preferred embodiment are fabricated of a high compressive strength plastic such as Techtron polyphenylene sulfide plastic. If the nail 10 is formed with a 5/16ths inch outside diameter, a Senco Model SN4 nail gun with pressurized air at 80 psi was found sufficient to drive the nail 10 flush into a pine board (such as may be found in pallets) or in the end of a railroad tie parallel to the grain. The Techtron PPS has a compressive strength of 18,000 psi at 10 percent deflection. For nail gun insertion, it has been found advisable to use a deflection sheath made of polypropylene or similar soft plastic material to isolate the passive transponder 12 from the high impact forces that may be exerted on the nail 10.

If the passive transponder 12 is read-writeable, additional information regarding the penetrable member will be entered at the time of insertion. Such information could include the geographic position of the railroad tie obtained from a geographic positioning satellite, the date, the identity of the crew, and so on. The information on the passive transponder 12, whether it is read-only or read-writeable, will also be stored on the reader 40 for record-keeping purposes.

When the railroad tie replacement crew arrives for tie replacement, it will also carry a reader40 which will be swept over the railroad ties in communicating proximity with the passive transponders 12 of the nails 10 or screws 30 that may have been placed in the railroad ties. The reader40 includes a second Hall effect sensor 78 that is associated with the antenna 60. The RSSI circuitry of the transponder module 70 will sample the voltage signal from the Hall effect sensor 78, which signal varies in proportion to the distance between the magnet 88 and Hall effect sensor 78, to detect a peak in the signal, thereby accurately locating the nail 10 or screw 30. This method of location will function satisfactorily at speeds on the order of ordinary train travel. At speeds of less than twenty mph, the sampling speed of the passive transponder 12 will permit RSSI discrimination of the signal received directly from the transponder 12. The reader 40 will detect and read information from the passive transponders 12 when a passive transponder 12 is detected which identifies the railroad tie as one which requires replacing, the reader 40 will signal to the crew such information.

The penetrable member identification system is also useful for a variety of other applications such as the identification of standing trees which may be harvested at a future date, for identifying other penetrable members such as utility poles in a manner similar to that described above for railroad ties, and other similar applications. The information stored on the passive transponder 12 will, of course, vary with the application. For example, if standing trees are being identified which may later be converted into utility poles, the passive transponder may accumulate information throughout the harvesting, treatment, manufacture, and installation processes that the tree would undergo in its transformation from a standing tree to an in-place utility pole.

## Claims

1. A method of identifying a penetrable member, comprising the steps of :
(a) encoding a transponder (12) with identification information;
(b) placing said transponder in an accommodating receptacle (22;34) in a fastener (10;30);
(c) inserting said fastener (10;30) into the penetrable member; and
(d) reading said identification information.

2. A method as defined in claim 1, wherein said transponder (12) has a read-only memory for storing said identification information.

3. A method as defined in claim 1 or 2, wherein said encoding is done during manufacture of said transponder (12).

4. A method as defined in any of the preceding claims, wherein said transponder (12) emits a coded RF signal with said identification information upon receiving an RF power signal from a reader.

5. A method as defined in any of the preceding claims, wherein said fastener (10;30) is inserted into the penetrable member prior to placing of said transponder (12) in said receptacle.

6. A method as defined in claim 1, wherein said transponder (12) is read-writeable.

7. A method as defined in any of the preceding claims, wherein said identification information includes information regarding the source and history of the penetrable member.

8. A method as defined in any of the preceding claims, wherein said identification information includes geographic location information received from a global positioning satellite.

9. A method as defined in any of the preceding claims and further comprising the step of drilling a pilot hole in the penetrable member into which said fastener (10;30) is inserted.

10. A method as defined in any of the preceding claims, wherein said fastener (10;30) is comprised of a first, proximal portion (18;36) for insertion into the penetrable member and a second, distal portion (20;32) that holds said transponder (12) and is secured to said inserted proximal portion of said fastener.

11. Amethod as defined in claim 1, wherein inserting of said fastener (10;30) is by impact or rotation.

12. A method recording to any of the preceding claims, wherein the fastener (10;30) is selected from the group comprising a nail, a screw and a bolt.

13. A fastener for identifying a penetrable member, comprising a body portion (20;32), and a transponder (12) mounted in the body portion.

14. Afasteneras defined in claim 13, wherein thefas- tener is in the form of a nail, bolt or screw (10,30).
